Europäisches Patentamt

European Patent Office

Office européen des brevets

(19)

(11) Publication number : **0 532 444 A1**

# (12) EUROPEAN PATENT APPLICATION

(21) Application number : **92500107.5**

(22) Date of filing : **14.08.92**

(51) Int. Cl.[5] : **B27K 3/15,** B27K 3/52

(30) Priority : **14.08.91 ES 9101892**

(43) Date of publication of application :
**17.03.93 Bulletin 93/11**

(84) Designated Contracting States :
**AT BE CH DE DK FR GB GR IE IT LI LU MC NL PT SE**

(71) Applicant : **MADERAS NAVARRA, S.A.**
**E-31119 Torres de Elorz (ES)**

(72) Inventor : **Sorbet Baztan,Josè Luis**
**Merindad de Sangüesa 12**
**Burlada (Navarra) (ES)**

(74) Representative : **Gomez-Acebo y Pombo, José Miguel**
**c/o CLARKE, MODET & Co., Avda. de los Encuartes, 4**
**E-28760 Tres Cantos, Madrid (ES)**

(54) **Process for impregnating wood with plastic material.**

(57)   Process for treating wood comprising impregnating unseasoned wood with a solution of ammonium salts, drying the wood, further impregnating the wood with a solution of a plastic material and heating the wood to drive off the solvent. The plastic material is preferably polycarbonate or polycarbonate-methyl methacrylate waste from other manufacturing processes.

EP 0 532 444 A1

The present invention has to do with a procedure for the saturation in depth of solid wood, of planks, boards or of mechanized surfaces, using thermoplastic polymers soluble in solvents, taking advantage of the recuperation of low cost residuals produced in the manufacturing plants of plastic injections (deadheads, defective parts, etc) cuttings from extrusion materials, residuals from the manufacturing of phonographic records, etc.

The wood processed using the procedure of the present invention is applicable in the field of the manufacturing of flooring for gymnasiums, computer rooms, insulating materials, flooring for plants using corrosive elements, flooring for ships, flooring for kitchens and bathrooms and also in the manufacturing of bathtubs, ski boards, baseball bats, hockey sticks, shovels, paddles, oars, etc. having for all these cases a resistance capacity much greater than that of analogous materials or of those known for the technical conditions and of durability superior to an average life of service of that of the traditional construction materials.

Among those methods known for the technical conditions to give to wood the qualities such as: resistance, durability and impermeability greater than its own natural state stands out the procedure to saturate the wood with plastic substances by which are obtained materials that offer a high degree of the aforementioned qualities and that also have the advantageous characteristics of wood, such as tact, lightness, beauty, etc.

To obtain a plastification of the object to be carried out on wood, a method is known which consists of forming stacks of thin layers of wood that have in between resin or similar synthetic substances. Subsequently, these stacks are pressed and molded having a compact form by which the wood, having a thin mass, results saturated with the plastic substance or similar ones. With this method, the realization of airplane propellers as well as rafters and forms of great dimensions and thicknesses, resorting to the joining of various different stacks.

However, this known method of superimposed layers requires, in the first place, the lay-out of wood in thin sheets and subsequently the need of enormous presses that can effect the necessary force. These inconveniences makes, in definite, the process expensive and can only be applied to special pieces or there where special characteristics of small weight is needed, resistance, etc., leaving totally out the process of the plastification of common daily use wood objects that using this procedure could attain qualities such as: durability, impermeability, lasting finish, etc.

The saturation of the wood with monomer of methyl methacrylate is known for more than 25 years, using a source of isotopes (cobalt-60) or chemical catalyzation through the application of peroxides and heat to obtain the polymerization of the methacrylate. However, these methods are practically out of use due to very high costs and that the radiation used degenerate the resins.

In connection with the present invention it has been now discovered, surprisingly, a very low cost procedure for the saturation of wood with plastic substances by which the solidification of the resin applied to the wood is carried out simply through the evaporation of the solvent, wherewith avoids the degeneration of the resin, while at the same time the saturated wood obtains a final hardness that may reach as much as 15 times the initial hardness.

The plastic materials to be used in the procedure of the present invention may consist of very low cost residuals proceeding from industries of thermoplastic injections, deadheads and defective pieces that, in many countries, are recycled.

For the saturation of the wood with the procedure of the invention, generally all types of wood and class of liquefiable polymerized plastic substances by solution in solvents can be used, for example: polycarbonate, polycarbonate-methyl methacrylate dissolved at 10-15% in methyl chloride, according to characteristics that the finished object should present.

In general terms, the procedure of the present invention comprises of saturating the wood with a solution from the residual plastics in solvents. The solvent can be recuperated by the evaporation and subsequent condensation.

In this way, the resistances obtained are very superior to those of boards formed by laminated wood and in where the wood does not meet such resistance, only the plastic that joins the layers.

On the other hand, laminated panels are considered to be of extraordinary resistances to the breakage by flection of approximately 1,000 kg/cm$^2$. However, with solid treated wood using the procedure of the invention, resistances of flection of 3,750 kg/cm$^2$ have been obtained, obtaining a composite of vegetable fiber and plastic.

The protection of the wood according to the present invention, is total with all the plastics used against the attacks of fungus and xylophagous insects, fulfilling at the same time legislation pursuant to resistance in case of fire by means of the addition of inflammable agents. This permits the placing of the finished products for flooring or walls in public establishments.

If in the saturation polycarbonate is used and a board lathed into squares of 2 x 2 cm$^2$ is formed previously saturated with ammonium sulphate with 30% water and dried at 12% in a drying room and joined together with epoxy resin or with polyester, you will obtain a fireproof and waterproof board for the utility of all types of applications in public establishments, railroads, warehouse facades, housing and ships.

If you use in the saturation polycarbonate and methyl methacrylate, you will obtain an excellent material for exterior carpentry, windows, wainscot of a facade, urban furniture???, beach and garden furniture, guaranteed for more than 10 years, without maintenance costs.

On some woods it will be interesting to carry out a previous treatment (on unseasoned wood) with a 25-30% humidity content, with an inexpensive thermosetting plastic (urea or copolymer of urea phenol or urea melamine) or with ammonium salts that stabilize the wood and permits the heating of same at over 160 degrees, reacting also with the acid sap of the wood neutralizing them with the double treatment in a retort with a medium dry setting you obtain a series of special characteristics among them the most important are:

- Hardness
- Dimensional stability as to the influences humidity changes.
- Increase of mechanical resistance.
- Increase of chemical resistance.
- Fireproof (M-1).
- Resistance to fungus and xylophagous insects.
- Thermal insulation and of electricity.
- Long lasting finish that only needs one polish in order to obtain a shining surface and that in case of scratches the color that appears is the same as the outside color.

Characteristics are these that transform the plasticize wood into an exceptional constructive element not only in traditional applications such as: floorings, structures, sports articles, etc. but also in mere applications reserved until now to other materials for which they may be an advantageous substitute.

All these characteristics can be attained through the double treatment pursuant to the invention. Starting with unseasoned wood saturated with products in an aqueous solution of 30% (plastics or ammonium salts) dried in a drying room up to a 8-12% humidity; saturation with polycarbonate or polycarbonate-methyl methacrylate in a methyl chloride solution of 10-20%.

The treatments are done in a retort with a vacuum of 920-970 millibar during 15-30 minutes and following a pressure of 5-15 kg/cm$^2$ during 20-30 minutes.

Subsequently, the present invention will be illustrated by means of the following example, which should be considered as not limiting the capacity of the invention.

## Example

This example describes the process used for the treatment of the pine wood called "pino radiata".

The 50 x 8 x 2 cm$_2$ wooden tubes, with 30% humidity are placed at the bottom of a container weakening them with steel cylinders to avoid flotation not impeding the contact of the saturation liquid ammonium sulphate at 30% in water, with which the container was filled subsequently in retort, it was subjected to a vacuum of 968 millibars extracting the occluded air in the wood following the 30 minutes to eliminate the vacuum and apply an air pressure of 5 kg/cm$^2$ during 20 minutes. Subsequently, the wood is dried in a drying room up to 12% humidity, leaving the wood with 25% of ammonium sulphate over the weight of dry wood.

Immediately proceed with the second treatment this time with a polycarbonate solution at 15% in methyl chloride, repeating the vacuum process - pressure and evaporation following the solvent.

## R E S U L T S

| WEIGHT | DRY WOOD | 62.4% |
|---|---|---|
| | Sulphate | 15.8% |
| | Polycarbonate | 11.8% |
| | Humidity | 10 % |

Density results 0.7.

The grain of the wood becomes more prominent.
Principal characteristics
Fireproof wood M-1
Waterproof

Luster can be obtained with a simple shine.

Perfect resistance to outside exposure without the necessity to varnish.

The nature of the invention having been sufficiently described, as well as carried out in practice, it should be noted that the lay-outs previously indicated are susceptible to detail modifications insofar as they do not alter its fundamental principle.

**Claims**

1. Procedure of the saturation of the wood in planks, surfaces or boards with plastic materials, characterized because it is understandable to treat the wood, in a given case previously saturated with ammonium salts, in unseasoned wood at a 25-30% of humidity and dried in a drying room at 10-12% of humidity, with a solution for saturation composed of the recuperation of plastic materials, in a solution in organic solvents, the carrying out of both saturations in a retort with the vacuum system-pressure.

2. Procedure according to assertion 1, recognized because the treatment is carried out under vacuum of 920 to 970 millibars during 15-30 minutes.

3. Procedure according to assertion 1, recognized because the treatment is carried out with a pressure of 5 to 10 kg/cm$^2$ during 20-40 minutes.

4. Procedure according to assertion 1, recognized because the plastic of the saturation becomes solid simply by evaporation of the solvent.

5. Procedure according to assertion 1, recognized because the plastic materials are of polycarbonate or mixes of polycarbonate with methyl methacrylate of low molecular weight, also of recusation.

6. Procedure according to assertion 5, recognized because a solution of saturation of polycarbonate or polycarbonate-methyl methacrylate is used.

7. Procedure according to assertion 1, recognized because optionally the wood is submitted to a treatment with urea formaldehyde or urea melamine formaldehyde.

8. Soft or hard wood treated by the procedure according to assertion 1 to 7, recognized because it presents fibrillar and intercellular saturated with polymeric materials.

9. Soft or hard wood according to assertion 8, recognized because the polymeric materials are elected among polycarbonate resins or polycarbonate-methyl methacrylate mixes.

10. Soft or hard wood according to assertion 8, recognized because said fibrillar and intercellular structure belong preferably red oak, beech wood, pine, alder, birchwood, sycamore and similar ones.

# EP 0 532 444 A1

**European Patent Office**

## EUROPEAN SEARCH REPORT

**Application Number**

EP 92 50 0107
Page 1

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO-A-9 111 305 (MADERAS NEVARRA S.A.)<br><br>* page 3, line 4 - line 20; claims 1-5,8-10; example *<br>--- | 1-4,7,8, 10 | B27K3/15<br>B27K3/52 |
| Y | GB-A-543 401 (G.IRSAY DE IRSA)<br>* page 2, line 96 - page 3, line 90 *<br>--- | 1,4,8,10 | |
| Y | GB-A-1 029 098 (VEDEX DANSK SKOVINDUSTRI A/S)<br>* page 1, line 12 - page 2, line 40; claims *<br>--- | 1,4,8,10 | |
| A | US-A-4 568 564 (A.E.WITT)<br><br>* claims 1-5,8-13,16 *<br>--- | 1,5,6,8, 9 | |
| A | CHEMICAL ABSTRACTS, vol. 97, no. 24, 13 December 1982, Columbus, Ohio, US; abstract no. 199780k, 'Modification of wood'<br>page 94 ;<br>& JP-A-57 102 302 (BELORUSSIAN TECHNOLOGICAL INSTITUTE)<br>25 June 1982<br>--- | | |
| A | SOVIET INVENTIONS ILLUSTRATED<br>Section Ch, Week 612, 30 April 1980<br>Derwent Publications Ltd., London, GB;<br>Class F09, Page 6, AN 21823C/12<br>& SU-A-674 904 (BELORUSS KIROV TECHN INS)<br>25 July 1979<br>---<br>-/-- | | |

**TECHNICAL FIELDS SEARCHED (Int. Cl.5)**

B27K

The present search report has been drawn up for all claims

| Place of search | Date of completion of the search | Examiner |
|---|---|---|
| THE HAGUE | 11 NOVEMBER 1992 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

5

EP 0 532 444 A1

**European Patent Office**

**EUROPEAN SEARCH REPORT**

Application Number

EP    92 50 0107
Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | JAPANESE PATENTS GAZETTE<br>Section Ch, Week D51, 3 February 1982<br>Derwent Publications Ltd., London, GB;<br>Class C03, Page 3, AN 94181D/51<br>& JP-A-56 144 907 (H.BITO) 11 November 1981<br><br>----- | | |
| | | | **TECHNICAL FIELDS SEARCHED (Int. Cl.5)** |

The present search report has been drawn up for all claims

| Place of search | Date of completion of the search | Examiner |
|---|---|---|
| THE HAGUE | 11 NOVEMBER 1992 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P0401)